# EUROPEAN PATENT APPLICATION

(11) **EP 1 830 450 A1**
(43) Date of publication of application: **05.09.2007**
(21) Application number: 06405089.1
(22) Date of filing: 02.03.2006
(51) Int. Cl.: H02J 13/00

(54) **Remote terminal unit and monitoring, protection and control of power systems**

(71) Applicant: ABB Technology AG, 8050 Zürich (CH)
(72) Inventor: Bertsch, Joachim, 8802 Kilchberg (CH); Suranyi, Andreas, 5430 Wettingen (CH); Jaggy, Engelbert, 5300 Ennetturgi (CH)
(74) Representative: ABB Patent Attorneys

(57) **Abstract**

The present invention is concerned with phasor-based monitoring, protection and control applications in electric power systems supervised and/or managed by a Supervisory Control And Data Acquisition / Energy Management System (SCADA/EMS). In order to enable the abovementioned applications without incurring heavy infrastructural investments, a phasor measurement facility is integrated into a Remote Terminal Unit (RTU) that is part of the SCADA/EMS system and comprises Input/Output (I/O) interfaces hard-wired to a substation of an electric power system. By taking advantage of the fact that RTUs as indispensable building blocks for any SCADA/EMS are part of every substation of the power system, no extra housing, cabling and EMC shielding for the additional functionality needs to be provided.

## Description

### FIELD OF THE INVENTION

The invention relates to the field of Wide-Area monitoring, protection and control of electric power systems. It departs from a Remote Terminal Unit as described in the preamble of claim 1.

### BACKGROUND OF THE INVENTION

An electric power system comprises a power transmission and/or distribution network interconnecting geographically separated regions, and a plurality of substations at the nodes of the power network. The substations include equipment for transforming voltages and for switching connections between individual lines of the power network. Power generation and load flow to consumers is managed by a central Energy Management System (EMS) and/or supervised by a Supervisory Control And Data Acquisition (SCADA) system. SCADA/EMS systems have a centralized structure with a Network Control Centre (NCC) at a control level and a plurality of devices termed Remote Terminal Units (RTU) at the substations of the power network. To enable the remote access to the process, the RTUs collect and time-stamp incoming data, such as binary states of individual substation components, measured values of system quantities, and counter values, and provide up to 10⁶ data points per second to the NCC. Likewise, RTUs transfer commands from the control level to a process level at the substations. In other words, each RTU represents an interface between the switchgear of the respective substation and the NCC, or in terms of communication handling, a station-level gateway including protocol converter for communicating with e.g. a remote SCADA/EMS master station. The corresponding master-slave oriented communication architecture formerly was provided for by specific modems with narrow bandwidth and high reliability. However, serial communication lines between the NCC and the RTUs nowadays are being substituted by Wide Area Networks (WAN) operated with TCP/IP based protocols like IEC 60870-5-104 or DNP 3.0.

Modem RTUs consist of some core-RTU or core device with the gateway to the master, a data concentrator functionality and optionally some Programmable Logic Control (PLC) functionality for control and closed-loop applications, and at least partially decentralized or distributed data sampling and data collecting functionality. In particular, in addition to direct I/O interfaces for hard wired connections of current and/or voltage transformers, the core-RTU may be connected to remote modular I/O components or cards for binary as well as analogue data acquisition, receiving and digitalizing analogue signals comprised e.g. between zero and 5 V or 20 mA. These remote I/O components are arranged in racks which, for the purpose of the present invention, are termed sub-RTUs or sub-racks, and which are located distant from the core-RTUs. Communication between the core- and the sub-RTUs is arranged for via a proprietary communication means based on an extension of the internal communication bus of the core-RTU. In addition, the RTUs may be connected, via field-bus interfaces, to various types of Intelligent Electronic Devices (IEDs) as described below. In any case, RTUs operate with Root Mean Square (RMS) values I_{eff}, U_{eff} of the currents and voltages monitored, which are sampled e.g. at 0.5 Hz or less, i.e. at a fraction of the 50/60 Hz network frequency of the power system. Accordingly, SCADA/EMS offers a rather static view on the entire electric power system adapted to the needs of a human network operator.

Substations for power distribution in high and medium voltage power networks include primary or field devices such as electrical cables, lines, busbars, switches, breakers, power transformers and instrument transformers arranged in switch yards and/or bays. These primary devices are operated in an automated way via a Substation Automation (SA) system responsible for controlling, protecting and monitoring of substations. The SA system comprises microprocessor based, programmable secondary devices, so-called Intelligent Electronic Devices (IED), interconnected in a SA communication network or local area network and interacting with the primary devices via a process interface. The IEDs are generally assigned to one of three hierarchical levels, namely the station level with the operators place including e.g. a Human-Machine Interface (HMI) and the abovementioned gateway to the Network Control Centre (NCC), the bay level with its bay units for protection and control, and the process level. A process interface between the process and the bay level generally comprises isolation amplifiers for galvanic isolation of analogue inputs or optical couplers for galvanic isolation of binary process inputs.

IEDs on the process-level comprise e.g. non-conventional or electronic sensors for voltage, current and gas density measurements, contact probes for sensing switch and transformer tap changer positions, or intelligent actuators for controlling switchgear like circuit breakers or disconnectors. Such process-level IEDs are connected to a bay unit via a serial link or optical process bus, which can be considered as the process interface replacing the hard-wired process-interface that conventionally connects the switchyard to the bay level equipment. Breaker-IEDs may be shielded against electromagnetic disturbances and directly integrated into the switchgear or respective intelligent primary equipment.

IEDs on the bay level, also termed bay units, in turn are connected to each other and to the IEDs on the station level via an optical inter-bay or station bus. Among these, IEDs for protection and control are responsible for the protection of network components, in particular lines, and continuously evaluate currents, voltages, temperatures measured locally, and locally disconnect lines or other components when these measurements indicate an emergency, overload or fault condition. Such multi-functional control protection devices with associated measurement and communication units are referred to as numerical, digital or protective relays. The monitoring, protection or control functions performed comprise for instance disturbance recording, over-current protection, differential protection, phase comparison, distance protection, breaker failure protection or bus bar protection.

In contrast to the abovementioned Supervisory Control And Data Acquisition and/or Energy Management System (SCADA/EMS), SA systems perform local tasks such as the operative functions control, monitoring, supervision and protection. These functions include all the automation of actions that are required to manage the specific substation, whether it is to isolate and earth a feeder bay or to collect and store condition- monitoring data. The typical time scale for these applications is a fraction of the period of the network, e.g. 1 ms and thus distinctively lower than for SCADA/EMS applications.

In the past years, continued load growth without a corresponding increase in transmission resources has resulted in reduced operational margins for many power systems world wide, and has led to operation of power systems ever closer to their stability limits. Likewise, load transmission and wheeling of power from distant generators to local load consumers has become common practice, and led to substantially increased amounts of power being transmitted through the existing networks, occasionally even causing transmission bottlenecks and electromechanical oscillations of parts of the electric power systems. These issues together with the on-going worldwide trend towards deregulation of the electric power markets on the one hand and the increased need for accurate and better network monitoring on the other hand, have created a demand for dynamic wide area monitoring, protection and control that goes beyond the rather static view as provided by SCADA/EMS.

A state or condition of an electric power system at one specific point in time can be obtained from a plurality of synchronized phasor measurements or snapshots collected across the electric power system or power transmission network. Phasors are time-stamped, complex values such as amplitude and phase, of local electric quantities such as currents, voltages and load flows, and can be provided by means of stand-alone Phasor Measurement Units (PMU). These units involve a very accurate global time reference, obtained e.g. by using the Global Positioning Satellite (GPS) system or any other comparable means, and allowing synchronization of the time-stamped values from different locations. The phasors are sampled at a rate of 20 to 60 Hz, and thus can provide a view on transient or sub-transient states. Conventionally, PMUs forward their measured phasor values to a system protection centre at control level or alternatively to a PMU acting as a master. Data exchange can further be established between the system protection centre and other control and protection systems to allow for optimal data sharing and control actions based on oscillation detection and frequency deviations.

In the patent US 6'845'333, a protective relay is disclosed that comprises means for producing synchronized voltage or current phasor values as well as means for receiving voltage or current values from another, remote relay via a communication channel. Synchronized phasor measurement data from one of the relays can be reported either as unsolicited binary messages at specific time intervals or solicited ASCII messages at specific times. Hence, current differential protection based on two synchronized phasors from the local and the remote relay at the two ends of a line, cable or interconnection, is proposed.

### DESCRIPTION OF THE INVENTION

It is an objective of the invention to enable, without incurring heavy infrastructural investments, phasor-based monitoring, protection and control applications in electric power systems supervised and/or managed by a Supervisory Control And Data Acquisition / Energy Management System (SCADA/EMS). These objectives are achieved by a Remote Terminal Unit (RTU) for SCADA/EMS systems according to claim 1, as well as a method and system for Wide-Area monitoring, protection and control according to claims 4 and 6, respectively. Further preferred embodiments are evident from the dependent patent claims.

According to the invention, a phasor measurement facility is integrated into a Remote Terminal Unit (RTU) that is part of the Supervisory Control And Data Acquisition / Energy Management System (SCADA/EMS) and comprises Input/Output (I/O) interfaces hard-wired to a substation of an electric power system managed by the SCADA/EMS system. By taking advantage of the fact that RTUs as indispensable building blocks for any SCADA/EMS are part of every substation of the power system, no extra housing, power supply, cabling and EMC shielding for the additional functionality needs to be provided.

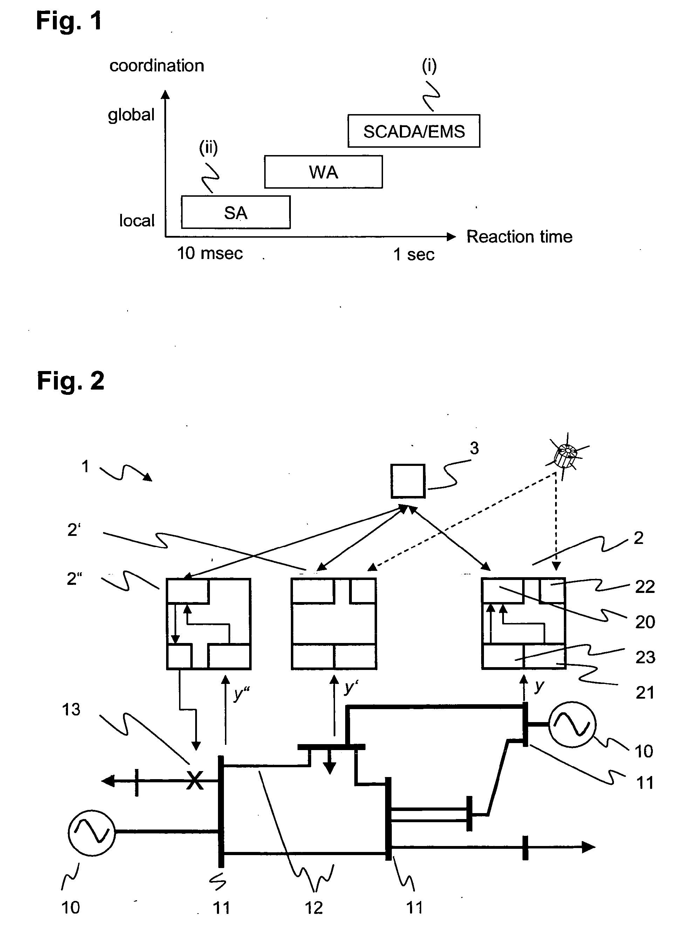

So-called Wide-Area (WA) monitoring, protection and control applications involving synchronized phasor measurements are based on a dynamic wide-area view of the power-system with a characteristic time scale and inter-substation coordination requirement. In the context of the present invention, it has been realized that the reaction time and the geographic extension of WA applications are both situated in-between the respective values for (i) *long-term* planning or management applications covering the *entire* power system, and (ii) *short-term* or instantaneous protection applications securing a single bay of an *individual* substation of the electric power system. Fig.1 depicts this finding by placing a box labelled "WA" between the "SCADA" box (action initiated by long term phenomena based on a static view) and a "SA" box (object protection by direct local actions based on online status information). Typical WA applications involving synchronized phasors are line differential protection, line thermal monitoring, phase angle monitoring, power oscillation protection, and voltage stability monitoring. Accordingly, attaching the phasor measurement facilities to the protective relays of a Substation Automation (SA) system as disclosed in the prior art is, contrary to the expectations of the skilled persons, not the only way to combine the former with existing equipment.

In a preferred variant of the invention, the phasor measurement facility is arranged in one sub-RTU or several sub-RTUs distributed over the substation and connected to a single core-RTU comprising the communication gateway. The hard-wired connections to the process can thus be shared between the data acquisition means for network data destined to slow management purposes and phasor data evaluated by Wide-Area monitoring, control and/or protection applications. Furthermore, the RTUs are independent of the Local Operating Network (LON) for Substation Automation communication. Thus, the instantaneous protection services provided by the bay units or protection relays are not impeded by phasor data being transferred over the LON and possibly conflicting with the time-critical commands for bay level protection of the individual substations of the electric power system.

In an advantageous embodiment, the phasor data is communicated to the Network Control Centre (NCC) via the communication gateway of the RTU and the dedicated communication link between the latter and the NCC. Thereby advantage is taken of the fact that the phasor measurement facilities need not be synchronized over a communication link for mutual data exchange, as they obtain the synchronizing signal over an independent channel. In addition, forwarding of time-stamped phasor values in a non-time critical manner to a Wide-Area control centre does not require the provision of a separate upstream communication link.

### BRIEF DESCRIPTION OF THE DRAWINGS

The subject matter of the invention will be explained in more detail in the following text with reference to preferred exemplary embodiments which are illustrated in the attached drawings, in which:
Fig. 1 illustrates, on a time-space diagram, the position of Wide-Area (WA) applications relative to Substation Automation (SA) applications and Supervisory Control And Data Acquisition / Energy Management System (SCADA/EMS) applications;
Fig.2 shows an electric power system with three Remote Terminal Units (RTU), and
Fig.3 depicts a RTU comprising a core-RTU and a sub-RTU.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

Fig.2 shows an overview of a power system 1 with generators 10 and substations represented each by a busbar 11 and interconnected by transmission lines 12. From a topological point of view, the busbars 11 in the substations form the nodes of the electrical power transmission network of the power system 1. Remote Terminal Units (RTU) 2 are assigned to the various substations. Exemplary RTU 2 comprises first data acquisition means 21 for measuring network data in the form of root mean square (RMS) values of system quantities yᵢ such as voltage or current at a particular point of the corresponding substation. It further comprises a communication gateway 20 for forwarding the measured network data to a Network Control Centre (NCC) 3 of a Supervisory Control And Data Acquisition / Energy Management System (SCADA/EMS) or other control and protection system. According to the present invention, at least the exemplary RTU 2 is equipped with synchronization means 22 that provides time stamps according to a global time reference such as the one transmitted with GPS signals. It further comprises second data acquisition means 23, also known as phasor measurement facility, for measuring synchronized phasor values in the form of magnitudes or phase angles of system quantities *y*ᵢ such as voltage or current at a particular point of the corresponding substation. Other RTUs 2', 2" assigned to different substations, which might be located at a distance of a few hundred km from each other may have the same functionality as the aforementioned exemplary RTU 2. Furthermore, via its I/O components and in accordance with a command from the NCC, further exemplary RTU 2" activates a switch 13 in order to shed some load or to isolate a supervised object from the rest of the power system.

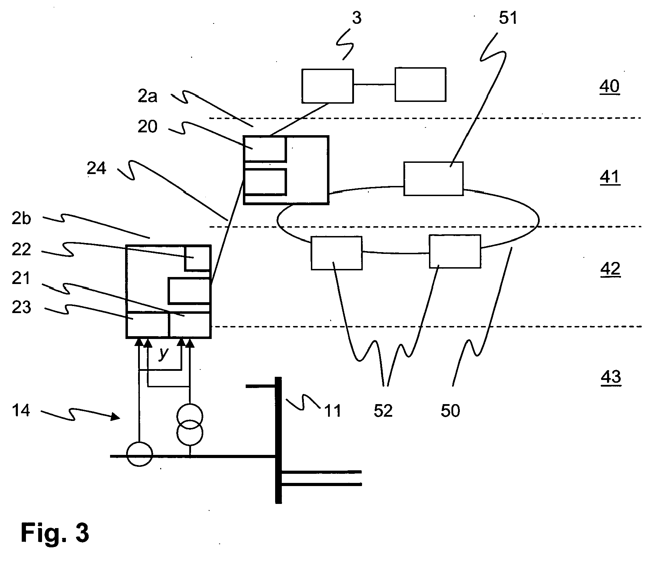

Fig.3 schematically depicts the assignment of different secondary devices of a particular substation to the various logical levels, as well as a part of their communicative interconnections. The Network Control Center (NCC) 3 is assigned to the control level 40, as is any other centralized system protection centre. The NCC 3 is connected to the dedicated communication gateway 20 of a core-RTU 2a, which in turn is connected to a sub-RTU 2b via dedicated intra-RTU communication means 24 such as an extension of the communication bus of the core-RTU. In general, there is only a single core-RTU 2a per substation, and the latter is assigned to the station level 41 as is e.g. a Human-Machine Interface 51. On a bay level 42, the bay units 52 are connected to the devices on the process level 43 for performing local protection functions and communicate among themselves and with the station level 41 via a Local Operating Network (LON) 50 or SA communication network. Sub-RTU 2b has I/O means 21, 23 for acquiring data by sampling the analogue voltage or current signal y provided by hard-wired instrument transformers 14 connected to busbar 11 on the process level 43.

In addition to what is shown in Fig.3, it goes without saying that the core-RTU 2a could itself comprise I/O components or be connected to further sub-RTUs of the same substation. Likewise, communication of the measured phasor values from the second data acquisition means 23 to an Intelligent Electronic Device (IED) at bay level 42 or at control level 40 could take place via other channels than the SCADA/EMS communication network sections 24 mentioned. In particular, phasor data collected at the I/O components of the core-RTU could be transmitted to the bay units 52 via the LON 50. Communication between IEDs over the SA communication network is governed by the substation communication standard IEC 61850 and based on a protocol stack with MMS (Manufacturing Message Specification), TCP/IP (Transmission Control Protocol / Internet Protocol) and the Ethernet protocol and hardware-management routines.

In order for the targeted Wide-Area (WA) monitoring, protection and control functions to be properly executable, the phasor data from disparate sources, often separated by hundreds of kilometres, are analysed in conjunction and have to refer to a common phase reference. Therefore, the different phasor measurement facilities 23 must have local clocks 22 that are synchronised with each other to within a given precision. Such a synchronisation of is preferably achieved with a known time distribution system, for example the global positioning (GPS) system. In a typical embodiment, the phasor data is determined at least every 100 milliseconds, with a temporal resolution of preferably less than 1 millisecond. Each measurement is then associated with a time stamp derived from the synchronised local clock. Such appropriately prepared phasor data enables implementing WA functionality such as line differential protection, line thermal monitoring, phase angle monitoring, power oscillation protection and voltage stability monitoring, which are summarized in the unpublished European Patent Application 05405615.5. The latter is incorporated herein for all purposes by way of reference.

In the context of the present invention, the terms behind SCADA/EMS, RTU, core-RTU and sub-RTU are defined by their functionality as indicated and may be called differently.

### LIST OF DESIGNATIONS

- 1: power system
- 10: generator
- 11: busbar
- 12: transmission line
- 13: switch
- 14: instrument transformer
- 2: remote terminal unit RTU
- 2a: core-RTU
- 2b: sub-RTU
- 20: communication gateway
- 21: first data acquisition means
- 22: synchronization means
- 23: phasor measurement facilty
- 24: intra-RTU communication means
- 3: networkcontrol centre
- 40: control level
- 41: station level
- 42: bay level
- 43: process level
- 50: local operating network
- 51: human machine interface
- 52: bay unit

## Claims

1. A Remote Terminal Unit (RTU) (2) comprising first data acquisition means (21) for acquiring, at a first sampling rate below a network frequency of the power system (1), first network data to be evaluated by a Supervisory Control And Data Acquisition / Energy Management System (SCADA/EMS) managing an electric power system (1),
**characterized in that** the RTU (2) comprises a synchronization means (22) providing time-stamps for global time synchronization and second data acquisition means (23) for acquiring, at a second sampling rate above said first sampling rate, time-stamped synchronized phasor data.

2. The RTU according to claim 1, **characterized in that** a communication gateway (20) for communication with a distant Network Control Centre (NCC) (4) of the SCADA/EMS system is arranged in a core-RTU (2a) and **in that** the synchronization means (22) and the second data acquisition means (23) are arranged in a sub-RTU (2b) distant from the core-RTU and connected to the core-RTU (2a) via dedicated inter-RTU communication means (24).

3. The RTU according to claim 1, **characterized in that** the second data acquisition means (23) is connected to a communication gateway (20) for communicating the time-stamped synchronized phasor data to a distant Network Control Centre (NCC) (4) of the SCADA/EMS system.

4. A method of performing, based on time-stamped synchronized phasor data, Wide-Area (WA) monitoring, protection and control applications on an electric power system (1), wherein the power system (1) is managed by means of a Supervisory Control And Data Acquisition / Energy Management System (SCADA/EMS) including a Remote Terminal Unit (RTU) (2) located at a substation of the power system (1), and wherein the RTU (2) comprises first data acquisition means (21) for acquiring, at a first sampling rate below a network frequency of the power system (1), first network data to be evaluated by the SCADA/EMS system, the method comprising
providing time-stamps for global time synchronization by synchronization means (22) and acquiring, at a second sampling rate above said first sampling rate, time-stamped synchronized phasor data by second data acquisition means (23), wherein the synchronization means (22) and data acquisition means (23) are arranged in the RTU (2)

5. The method according to claim 4, **characterized in that** it comprises communicating the time-stamped synchronized phasor data to a distant Network Control Centre (NCC) (4) of the SCADA/EMS system via a communication gateway (20) connected to the second data acquisition means (23).

6. A Wide-Area (WA) monitoring, protection and control system for performing Wide Area monitoring, protection and control applications on an electric power system (1), wherein the power system (1) is managed by means of a Supervisory Control And Data Acquisition / Energy Management System (SCADA/EMS) including a Remote Terminal Unit (RTU) (2) located at a substation of the power system (1), wherein the RTU (2) comprises first data acquisition means (21) for acquiring, at a first sampling rate below a network frequency of the power system (1), first network data to be evaluated by the SCADA/EMS system,
**characterized in that** the RTU (2) comprises a synchronization means (22) providing time-stamps for global time synchronization and second data acquisition means (23) for acquiring, at a second sampling rate above said first sampling rate, time-stamped synchronized phasor data to be evaluated by the WA monitoring, protection and control system.
